# EUROPEAN PATENT APPLICATION

(11) **EP 1 262 661 A1**
(43) Date of publication of application: **04.12.2002**
(21) Application number: 02010447.7
(22) Date of filing: 08.05.2002
(51) Int. Cl.: F04B 27/08, B23P 15/10

(54) **Shoe for swash plate type compressor and method of producing the same**

(30) Priority: 21.05.2001 JP 2001150406; 16.11.2001 JP 2001351106
(71) Applicant: Kabushiki Kaisha Toyota Jidoshokki, Kariya-shi, Aichi-ken (JP)
(72) Inventor: Tarutani, Tomoji, Kariya-shi, Aichi-ken (JP); Wakita, Tomohiro, Kariya-shi, Aichi-ken (JP); Kurakake, Hirotaka, Kariya-shi, Aichi-ken (JP); Iida, Hidenori, Kariya-shi, Aichi-ken (JP); Usui, Naoki, Kariya-shi, Aichi-ken (JP); Ota, Masaki, Kariya-shi, Aichi-ken (JP); Hiramatsu, Osamu, Kariya-shi, Aichi-ken (JP); Narukawa, Kiyoshi, Kariya-shi, Aichi-ken (JP); Inoue, Yoshinori, Kariya-shi, Aichi-ken (JP)
(74) Representative: Leson, Thomas Johannes Alois, Dipl.-Ing.

(57) **Abstract**

A method of producing a shoe for a swash plate type compressor, said shoe being disposed between a swash plate and a piston of said swash plate type compressor, characterized by comprising: a forming step (S1) of forming a steel blank into a shoe product including an end product shoe and a pre size-adjusted shoe; and a nitriding step (S4) of effecting a nitriding treatment on said shoe product; and wherein a quenching treatment is not effected after said forming step.

## Description

This application is based on Japanese Patent Application Nos. 2001-150406 filed May 21, 2001, and 2001-351106 filed November 16, 2001, the contents of which are incorporated hereinto by reference.

### BACKGROUND OF THE INVENTION

### Field of the Invention

The present invention relates in general to a shoe which is used for a swash plate type compressor and which is disposed between a swash plate and a piston of the swash plate type compressor. The invention is also concerned with a method of producing the shoe.

### Discussion of the Related Art

A swash plate type compressor used as a refrigerant compressor in an air conditioning system of an automotive vehicle includes (a) a rotary drive shaft, (b) a swash plate supported by the drive shaft such that the swash plate is inclined or tiltable with respect to a plane perpendicular to an axis of rotation of the drive shaft, (c) a housing which supports the drive shaft such that the drive shaft is rotatable and axially immovable relative to the housing, which has a plurality of cylinder bores which are located at respective circumferential portions radially spaced from the axis of the drive shaft and which extend in a direction parallel to the drive shaft, and (d) a plurality of pistons, each of which includes a head portion slidably engaging a corresponding one of the cylinder bores and an engaging portion engaging a radially outer portion of opposite surfaces of the swash plate, each piston being reciprocated by the swash plate rotated with the rotary drive shaft. Between the swash plate and each piston, a pair of shoes are disposed. Each shoe functions as a sliding member to slide on both of the swash plate and the piston. Since the swash plate is rotated at a relatively high speed and the piston is reciprocated at a relatively high speed, it is required that the shoe exhibits a good sliding characteristic. In other words, the shoe needs to exhibit various excellent characteristics such as high degrees of wear resistance and seizure resistance.

The shoe is preferably formed of a steel material since the shoe can be produced at a relatively low cost by using the steel and the shoe formed of the steel (hereinafter referred to as "steel shoe") exhibits a high degree of strength. To permit the steel shoe to exhibit high degrees of wear resistance and seizure resistance described above, the steel shoe is subjected to a thermal refining treatment such as quenching and tempering, and a surface treatment such as a nitriding treatment. The thermal refining treatment and the nitriding treatment, however, require an energy source for heating the shoe and a relatively long period of time to effect the treatments on the shoe, undesirably pushing up a cost of manufacture of the shoe.

### SUMMARY OF THE INVENTION

It is therefore an object of the present invention to provide a steel shoe which exhibits a good sliding characteristic and which is economical to manufacture, with a minimum or limited heat treatment performed on the shoe. It is an optional object of the invention to provide a method of producing a steel shoe in a simplified and economical manner. The objects may be achieved according to any one of the following modes of the present invention, each of which is numbered like the appended claims and depends from the other mode or modes, where appropriate, to indicate and clarify possible combinations of elements or technical features of the present invention, for easier understanding of the invention. It is to be understood that the present invention is not limited to the technical features or any combinations thereof which will be described for illustrative purpose only. It is to be further understood that a plurality of elements or features included in any one of the following modes of the invention are not necessarily provided all together, and that the invention may be embodied without some of the elements or features described with respect to the same mode.

(1) A method of producing a shoe for a swash plate type compressor, the shoe being disposed between a swash plate and a piston of the swash plate type compressor, the method comprising:
a forming step of forming a steel blank into a shoe product including an end product shoe and a pre size-adjusted shoe; and
a nitriding step of effecting a nitriding treatment on the shoe product;
and wherein a quenching treatment is not effected after the forming step.

The wear of the shoe influences the durability of the swash plate type compressor. The nitriding treatment permits the shoe to have a high degree of hardness in its surface portion, so that the steel shoe subjected to the nitriding treatment exhibits a good wear resistance as well as a good corrosion resistance. Accordingly, the swash plate type compressor equipped with the steel shoe which has been subjected to the nitriding treatment has a high degree of durability.

The wear resistance of the shoe is largely dependent upon the hardness of its surface portion (hereinafter referred to as "surface hardness"). Accordingly, the shoe exhibits a sufficiently high degree of wear resistance when the shoe has a high degree of surface hardness. The conventionally effected quenching treatment permits the shoe to exhibit a high degree of hardness in not only the surface portion but also its inner portion. The hardness of the shoe in its inner portion, however, does not give a large influence on the wear resistance of the shoe. Accordingly, even if the quenching treatment is not performed on the shoe, the shoe exhibits a good sliding characteristic without suffering from a considerable decrease in its wear resistance. The quenching treatment causes transformation of the material of the shoe, so that the shoe suffers from a large residual stress. The residual stress is removed from the shoe when the shoe is heated in the subsequent nitriding treatment. Accordingly, when the nitriding treatment is performed on the shoe which has been subjected to the quenching treatment, the shoe undesirably suffers from a strain. Since the configuration of the shoe influences the sliding characteristic of the shoe, the shoe needs to be subjected to an additional working operation such as a grinding operation, for adjusting its size, when the configuration of the shoe is changed due to the strain. In this case, the process steps for producing the shoe are inevitably complicated, and the cost of manufacture of the shoe is undesirably increased.

The present method of producing a shoe according to the above mode (1) permits economical and simple production of the shoe by eliminating the quenching treatment while permitting the shoe to exhibit a good sliding characteristic by effecting the nitriding treatment on the shoe.

The forming step in the present method according to the above mode (1) may be effected according to any known method which will be described in the DETAILED DESCRIPTION OF PREFERRED EMBODIMENTS. The term "end product shoe" refers to a shoe which can be installed on the compressor without effecting a grinding operation to adjust its size while the term "pre size-adjusted shoe" refers to a shoe which needs to be subjected to the grinding operation to adjust its size before the shoe is installed on the compressor. The nitriding treatment will be described.

(2) A method according to the above mode (1), wherein any heat-treatment other than the nitriding treatment is not effected after the forming step.

In producing the steel shoe, the shoe is conventionally subjected, after the forming step, to another heat treatment in addition to the quenching treatment. For instance, the shoe is subjected to a tempering treatment effected following the quenching treatment, or a tempering treatment effected following the nitriding treatment to adjust its hardness. In the present method according to the above mode (2) wherein the quenching treatment is not effected after the forming step, it is not necessary to effect the tempering treatment which is usually effected following the quenching treatment. Further, the surface hardness of the shoe which is usually adjusted by the quenching and tempering treatments can be adjusted by the nitriding treatment if effected under suitable and optimum conditions. Therefore, the present method according to the mode (2) wherein the heat treatment is minimized permits economical and simple production of the steel shoe. In general, the heat treatment causes a residual stress in the shoe or a change of the configuration of the shoe, depending upon the heating conditions such as the heating temperature. In view of this, the shoe produced by the method according to the mode (2) wherein the heat treatment effected on the shoe is minimized or limited assures an improvement in its quality without suffering from the disadvantages of the heat treatment.

(3) A method according to the above mode (1) or (2), wherein a size-adjustment grinding operation is not effected after the nitriding step.

When the shoe is subjected to the grinding operation after the nitriding treatment, the nitrided layer formed on the surface of the shoe by the nitriding treatment is inevitably removed therefrom. In view of this, it is necessary to form, on the surface of the shoe, the nitrided layer having a relatively large thickness by increasing the time period during which the nitriding treatment is effected, for instance. The shoe produced according to the present method wherein the quenching treatment is eliminated is free from deformation which is experienced in the conventional shoe due to the nitriding treatment effected following the quenching treatment. Accordingly, the shoe maintains the desired configuration after the nitriding treatment. Therefore, the present method according to the above mode (3) wherein the grinding operation is not effected on the shoe after the nitriding step is effective to reduce the required time for the nitriding treatment and produce the shoe at a relatively low cost.

(4) A method according to the above mode (3), wherein the end product shoe is formed in the forming step and the size-adjustment grinding operation is not effected after the forming step.

As described above, the present method wherein the quenching treatment is eliminated is effective to prevent the deformation of the shoe. By using a suitable die assembly in a press forging, the steel blank can be formed into the end product shoe in the forming step. In this case, it is not necessary to effect the size-adjustment grinding operation on the shoe after the forming step. In general, it takes a relatively long period of time to effect the grinding operation. Accordingly, the present method according to the above mode (4) wherein the grinding operation is not effected after the forming step permits economical and simple production of the steel shoe.

(5) A method according to any one of the above modes (1)-(4), wherein the shoe is a part-spherical crown shoe having a flat portion to be held in sliding contact with the swash plate and a part-spherical portion to be held in sliding contact with the piston, the flat portion being formed to have a slightly convex surface.

In general, the shoe has a part-spherical crown shape and slides on the swash plate at its flat portion. Since the swash plate is rotated at a relatively high speed, the sliding characteristic of the shoe with respect to the swash plate is particularly important in the swash plate type compressor. The flat portion of the shoe is lubricated by a lubricant included in the refrigerant. The shoe exhibits a sufficiently high degree of sliding characteristic if the lubricant is effectively introduced into the central part of the flat portion. To this end, the flat portion of the shoe desirably has a convex shape in which the central part is slightly higher than the radially outer portion. As is clear from the results of the experiment described below, it is confirmed by the inventors of the present invention that the convex flat portion was deformed into a concave shape due to the nitriding treatment effected following the quenching treatment. As described above, it is desirable that the flat portion of the shoe is formed to be convex for assuring a sufficiently high sliding characteristic. Accordingly, the flat portion which has been deformed into the concave shape needs to be subjected to a grinding operation in which the radially outer portion of the concave flat portion is ground to provide the convex flat portion. In this case, the amount of the stock removal of the radially outer portion of the concave flat potion by the grinding operation is inevitably large, resulting in an excessive removal of the nitrided layer formed on the surface of the shoe. Further, the time period during which the grinding operation is effected is undesirably increased. Therefore, the present method according to the mode (5) directed to the shoe having the convex flat portion effectively enjoys the advantages of minimizing the heat treatment.

(6) A method according to any one of the above modes (1)-(5), wherein the steel blank consists of a high-carbon chrome bearing steel.

The material of the steel shoe to which the principle of the present invention is applied is not particularly limited, but may be suitably selected from among those having a sufficiently high degree of strength and permitting the formation of a suitable nitrided layer on the surface of the shoe by the nitriding treatment. Since the shoe formed of the high-carbon chrome bearing steel (SUJ according to the Japanese Industry Standad G 4805) described in the mode (6) has a high degree of surface hardness exceeding Hv 500 by a soft nitriding treatment which will be described, the shoe formed of the high-carbon chrome bearing steel exhibits an excellent wear resistance. It is desirable that the high-carbon chrome bearing steel SUJ2 (according to the JIS G 4805) is employed for forming the shoe, in view of the fact that the shoe is a relatively small component.

If the soft nitriding treatment is employed in the nitriding step, the material of the shoe is selected from among various kinds of materials. For instance, the shoe can be formed of alloy steels such as a soft steel, a low-carbon steel, a medium-carbon steel, a high-carbon steel, a low alloy steel, and a stainless steel, or ferrous materials such as cast iron. The surface hardness of the shoe given by the soft nitriding treatment is increased with an increase in the amount of carbon included in the steel, so that the shoe to be obtained exhibits an excellent wear resistance. When the base body of the shoe is formed of the medium carbon steel or the high carbon steel such as S45C, S50C, S55C according to the JIS G 4051, or the low-carbon and low alloy steel such as SCM 415 according to the JIS G 4105, the shoe has the surface hardness of not lower than Hv 400 in Vickers hardness, for thereby exhibiting an excellent wear resistance. Since the medium-carbon steel, high-carbon steel and low-carbon and low-alloy steel do not include a large amount of expensive alloy elements and are relatively inexpensive, the shoe whose base body is formed of those steels is relatively inexpensive. By changing the kind and the amount of the alloy elements to be added, individual stainless steels to be obtained exhibit respective different characteristics (such as a good heat resistance and a good corrosion resistance). Accordingly, where the stainless steel is used as the material of the base body of the shoe, the shoe has the desired characteristics corresponding to those of the stainless steel.

(7) A method according to any one of the above modes (1)-(6), wherein the nitriding treatment consists of a gas soft nitriding treatment.

By the nitriding treatment, the nitrided layer as the hard layer is formed on the surface of the base body of the shoe. The nitrided layer exhibits excellent wear resistance and corrosion resistance. The nitriding treatment is generally classified into a gas nitriding treatment in which the nitrided layer to be formed is relatively hard and a soft nitriding treatment in which the nitrided layer to be formed is relatively soft. In the following description, the gas nitriding treatment is referred to as "a hard nitriding treatment". In the hard nitriding treatment, the nitrogen (N) is diffused in an atmosphere of the NH₃ gas to form the nitride. The soft nitriding treatment includes a gas soft nitriding method, a salt-bath nitriding method (generally called as a tufftride method) and an ion nitriding method, for instance. Any of those nitriding treatments can be employed. Other nitriding treatments such as carbonitriding and nitrosulphurizing can also be employed. The nitriding treatment is effected according to a known manner and under appropriate conditions determined depending upon the desired characteristics of the shoe to be obtained.

As described above, the soft nitriding treatment is advantageous in that the soft nitriding treatment can be effected on various kinds of materials for forming the shoe in a relatively short period of time. On the other hand, the hard nitriding treatment requires an additional step of removing the superficial or outermost portion of the nitrided layer or heating and softening that portion since the superficial or outermost portion of the nitrided layer formed by the hard nitriding treatment has excessively high hardness. In the light of the above, the soft nitriding treatment is desirably employed in the present method.

As described in the above mode (5), the gas soft nitriding treatment is preferably employed as the soft nitriding treatment. In the gas soft nitriding treatment, the nitrogen (N) and the carbon (C) are diffused in the steel in an atmosphere of a mixed gas consisting of the RX gas and the NH₃ gas. By effecting the gas soft nitriding treatment, the shoe exhibits a high degree of surface hardness of not lower than Hv 500. The gas soft nitriding treatment does not cause a serious pollution problem, permitting an improvement in the working environment. Further, the gas soft nitriding treatment can be effectively performed for mass-production of the shoes, and is advantageous for the surface treatment of the shoes.

(8) A shoe for a swash plate type compressor, the shoe being disposed between a swash plate and a piston of the swash plate type compressor and produced according to a method as defined in any one of the above modes (1)-(7).

The shoe produced by the method according to any one of the above modes (1)-(7) is relatively inexpensive while exhibiting high degrees of seizure resistance and wear resistance as well as an excellent sliding characteristic.

### BRIEF DESCRIPTION OF THE DRAWINGS

The above and optional objects, features, advantages and technical and industrial significance of the present invention will be better understood and appreciated by reading the following detailed description of presently preferred embodiments of the invention, when considered in connection with the accompanying drawings, in which:
Fig. 1 is a front elevational view in cross section of a swash plate type compressor equipped with the shoe to which the principle of the present invention is applied;
Fig. 2 is a front elevational view in cross section of the shoe of Fig. 1;
Fig. 3 is an elevational view schematically showing a flat portion of the shoe, wherein the amount of convexity of the flat portion is exaggerated;
Fig. 4 is a flow chart showing process steps for producing the shoe according to one embodiment of the invention;
Fig. 5 is a flow chart showing details of a forming step S1 in the flow chart of Fig. 3;
Fig. 6 is a flow chart showing details of a nitriding step S4 in the flow chart of Fig. 3;
Fig. 7A shows a principal part of a flow chart of process steps for producing the shoe according to another embodiment of the invention;
Fig. 7B shows a principal part of a flow chart of process steps for producing the shoe according to still another embodiment; and
Fig. 8 is an elevational view schematically showing a deformed flat portion of a shoe which has been subjected to the nitriding treatment after the quenching treatment.

### DETAILED DESCRIPTION OF THE PREFERRED EMBODIMENTS

Referring to the accompanying drawings, there will be described presently preferred embodiments of this invention as applied to a shoe installed on a swash plate type compressor used for an air conditioning system of an automotive vehicle. In the following description, the structure of the swash plate type compressor, the configuration and structure of the shoe, and the method of producing the shoe are explained in this order.

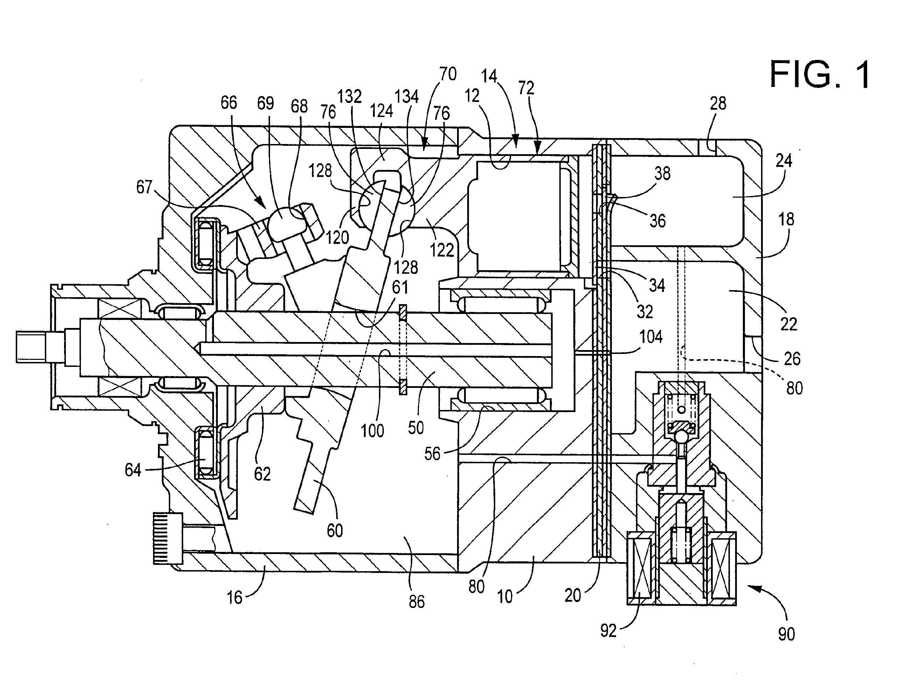

Referring first to Fig. 1, there is shown a compressor of swash plate type on which the shoe produced according to the present invention is installed. In Fig. 1, reference numeral 10 denotes a cylinder block having a plurality of cylinder bores 12 formed so as to extend in its axial direction such that the cylinder bores 12 are arranged along a circle whose center lies on a centerline of the cylinder block 10. Single-headed pistons generally indicated at 14 (hereinafter simply referred to as "piston 14") are reciprocably received in the respective cylinder bores 12. To one of the axially opposite end faces of the cylinder block 10, (the left end face as seen in Fig. 1, which will be referred to as "front end face"), there is attached a front housing 16. To the other end face (the right end face as seen in Fig. 1, which will be referred to as "rear end face"), there is attached a rear housing 18 through a valve plate 20. The front housing 16, rear housing 18 and cylinder block 10 cooperate to constitute a housing assembly of the swash plate type compressor. The rear housing 18 and the valve plate 20 cooperate to define a suction chamber 22 and a discharge chamber 24, which are connected to a refrigerating circuit (not shown) through an inlet 26 and an outlet 28, respectively. The valve plate 20 has suction ports 32, suction valves 34, discharge ports 36 and discharge valves 38.

A rotary drive shaft 50 is disposed in the cylinder block 10 and the front housing 16 such that the axis of rotation of the drive shaft 50 is aligned with the centerline of the cylinder block 10. The drive shaft 50 is supported at its opposite end portions by the front housing 16 and the cylinder block 10, respectively, via respective bearings. The cylinder block 10 has a central bearing hole 56 formed in a central portion thereof, and the bearing is disposed in this central bearing hole 56, for supporting the drive shaft 50 at its rear end portion. The front end portion of the drive shaft 50 is connected, through a clutch mechanism such as an electromagnetic clutch, to an external drive source (not shown) in the form of an engine of an automotive vehicle. In operation of the compressor, the drive shaft 50 is connected through the clutch mechanism to the vehicle engine in operation so that the drive shaft 50 is rotated about its axis.

The rotary drive shaft 50 carries a swash plate 60 such that the swash plate 60 is axially movable and tiltable relative to the drive shaft 50. The swash plate 60 has a central hole 61 through which the drive shaft 50 extends. The inner dimension of the central hole 61 as measured in a vertical direction of Fig. 1 gradually increases in a direction from the axially intermediate portion toward each of the axially opposite ends, and the transverse cross sectional shape of the central hole 61 at each of the axially opposite ends is elongated. To the drive shaft 50, there is fixed a rotary member 62 as a torque transmitting member, which is held in engagement with the front housing 16 through a thrust bearing 64. The swash plate 60 is rotated with the drive shaft 50 by a hinge mechanism 66 during rotation of the drive shaft 50. The hinge mechanism 66 guides the swash plate 60 for its axial and tilting motions. The hinge mechanism 66 includes a pair of support arms 67 fixed to the rotary member 62, guide pins 69 which are formed on the swash plate 60 and which slidably engage guide holes 68 formed in the support arms 67, the central hole 61 of the swash plate 60, and the outer circumferential surface of the drive shaft 50.

The piston 14 indicated above includes an engaging portion 70 engaging the radially outer portion of the opposite surfaces of the swash plate 60, and a head portion 72 formed integrally with the engaging portion 70 and fitted in the corresponding cylinder bore 12. The head portion 72 in the present embodiment is made hollow, for thereby reducing the weight of the piston 14. The head portion 72, cylinder bore 12, and valve plate 20 cooperate with one another to define a pressurizing chamber. The engaging portion 70 engages the radially outer portion of the opposite surfaces of the swash plate 60 through a pair of part-spherical-crown shoes 76. The shoes 76 will be described in greater detail.

A rotary motion of the swash plate 60 is converted into a reciprocating linear motion of the piston 14 through the shoes 76. A refrigerant gas in the suction chamber 22 is sucked into the pressurizing chamber of the cylinder bore 12 through the suction port 32 and the suction valve 34, when the piston 14 is moved from its upper dead point to its lower dead point, that is, when the piston 14 is in the suction stroke. The refrigerant gas in the pressurizing chamber is pressurized by the piston 14 when the piston 14 is moved from its lower dead point to its upper dead point, that is, when the piston 14 is in the compression stroke. The pressurized refrigerant gas in the pressurizing chamber is discharged into the discharge chamber 24 through the discharge port 36 and the discharge valve 38. A reaction force acts on the piston 14 in the axial direction as a result of compression of the refrigerant gas in the pressurizing chamber. This compression reaction force is received by the front housing 16 through the piston 14, swash plate 60, rotary member 62 and thrust bearing 64.

The cylinder block 10 has an intake passage 80 formed therethrough for communication between the discharge chamber 24 and a crank chamber 86 which is defined between the front housing 16 and the cylinder block 10. The intake passage 80 is connected to a solenoid-operated control valve 90 provided to control the pressure in the crank chamber 86. The solenoid-operated control valve 90 includes a solenoid coil 92. The amount of electric current applied to the solenoid coil 92 is controlled depending upon the air conditioner load by a control device not shown constituted principally by a computer.

The rotary drive shaft 50 has a bleeding passage 100 formed therethrough. The bleeding passage 100 is open at one of its opposite ends to the central bearing hole 56, and is open at the other end to the crank chamber 86. The central bearing hole 56 communicates at its bottom with the suction chamber 22 through a communication port 104.

The present swash plate type compressor is of variable capacity type. By controlling the pressure in the crank chamber 86 by utilizing a difference between the pressure in the discharge chamber 24 as a high-pressure source and the pressure in the suction chamber 22 as a low pressure source, a difference between the pressure in the pressurizing chamber and the pressure in the crank chamber 86 is regulated to change the angle of inclination of the swash plate 60 with respect to a plane perpendicular to the axis of rotation of the drive shaft 50, for thereby changing the reciprocating stroke (suction and compression strokes) of the piston 14, whereby the displacement capacity of the compressor can be adjusted. Described in detail, by energization and de-energization of the solenoid coil 92 of the solenoid-operated control valve 90, the crank chamber 86 is selectively connected to and disconnected from the discharge chamber 24, so that the pressure in the crank chamber 86 is controlled.

The cylinder block 10 and each piston 14 are formed of an aluminum alloy. The piston 14 is coated at its outer circumferential surface with a fluoro resin film which prevents a direct contact of the aluminum alloy of the piston 14 with the aluminum alloy of the cylinder block 10 so as to prevent seizure therebetween, and makes it possible to minimize the amount of clearance between the piston 14 and the cylinder bore 12. Other materials may be used for the cylinder block 10, the piston 14, and the coating film

The end portion of the engaging portion 70 of the piston 14, which is remote from the head portion 72, has a U-shape in cross section. Described in detail, the engaging portion 70 has a base section 124 which defines the bottom of the U-shape, and a pair of substantially parallel arm sections 120, 122 which extend from the base section 124 in a direction perpendicular to the axis of the piston 14. The two opposed lateral walls of the U-shape of the engaging portion 70 have respective recesses 128 which are opposed to each other. Each of these recesses 128 is defined by a part-spherical inner surface of the lateral wall. The part-spherical inner surfaces of the recesses 128 are located on the same spherical surface.

The base body of the swash plate 60 which engages the shoes 76 is formed of spheroidal graphite cast iron, generally called as ductile cast iron such as FCD 700 or FCD 600 according to the JIS G 5502. The swash plate 60 includes sliding surfaces 132, 134 which are to be held in sliding contact with the shoes 76. At each portion of the base body of the swash plate 60 providing each of the sliding surfaces 132, 134, an aluminum sprayed film and a lubricating film are formed in this order. The lubricating film is formed of a synthetic resin in which MoS₂ and graphite are dispersed. The lubricating film is effective to improve the sliding characteristic of the swash plate 60 and the shoe 76 by reducing the friction between the sliding surfaces of the swash plate 60 and the shoe 76. The aluminum sprayed film is effective to maintain a good sliding characteristic while preventing a direct contact of the base body of the swash plate 60 with the shoe 76 even when the lubricating film is removed or separated due to wear, for instance.

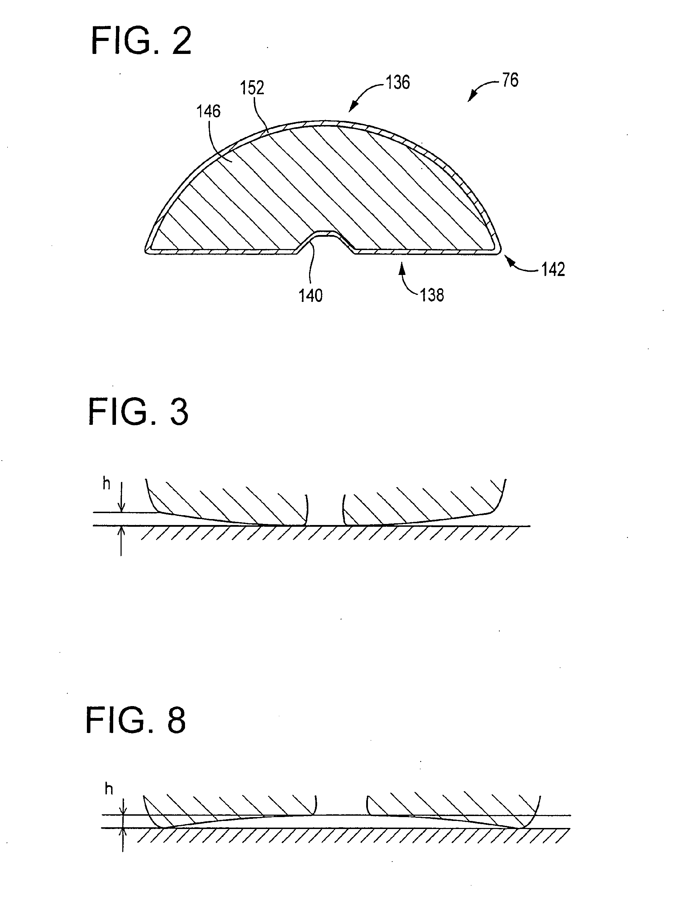

As shown in Fig. 2, each of the pair of shoes 76 has a part-spherical crown shape, and includes a part-spherical portion 136 having a generally convex part-spherical surface and a flat portion 138 having a generally flat surface. Strictly speaking, the flat portion 138 is slightly convex and has a recess 140 formed at its central portion for accommodating a lubricant oil as the lubricant to assure a good sliding characteristic of the shoe 76 with respect to the swash plate 60. Accordingly, the flat portion 138 provides an annular sliding surface which is to be held in sliding contact with the swash plate 60. Between the part-spherical portion 136 and the flat portion 138, there is formed a rounded edge 142 having a relatively small radius of curvature. The convex flat portion 138 and the rounded edge 142 are effective to introduce the lubricant oil between the sliding surfaces 132, 134 of the swash plate 60 and the flat portion 138 of each of the pair of shoes 76 while preventing foreign matters from entering between the sliding surfaces 132, 134 of the swash plate 60 and the flat portion 138 of each of the pair of shoes 76, when the shoes 76 slidably engage the swash plate 60. The pair of shoes 76 slidably engage the part-spherical inner surfaces of the recesses 128 of the piston 14 at their part-spherical portions 136 and slidably engage the radially outer portion of the opposite surfaces of the swash plate 60, i.e., the sliding surfaces 132, 134, at their flat portions 138. In other words, the pair of shoes 76 slide on the swash plate 60 and the piston 14 at their flat portions 138 and part-spherical portions 136, respectively. The pair of shoes 76 are designed such that the convex part-spherical surfaces of the part-spherical portions 136 are located on the same spherical surface. In other words, each shoe 76 has a part-spherical crown shape whose size is smaller than a hemi-sphere by an amount corresponding to a half of the thickness of the swash plate 60. The shape of the shoe is not limited to that described above. For instance, the shoe used for a compressor of fixed capacity type has a size slightly larger than the hemi-sphere for preventing a reduction in the sliding surface area even when the flat portion of the shoe is worn.

As described above, the amount of convexity (hereinafter referred to as "convexity amount") of the flat portion 138 and the presence of the rounded edge 142 influence the sliding characteristic of the shoe 76. Fig. 3 schematically shows the flat portion 138 of the shoe 76, wherein the convexity amount "h" of the flat portion 138 is exaggerated. The convexity amount "h" of the flat portion 138 is preferably held in a range of not smaller than 1µm and not larger than 10µm. If the convexity amount of the flat portion 138 is held within the specified range, the lubricant oil can be effectively introduced between the sliding surfaces of the swash plate 60 and the shoe 76 while preventing the foreign matters entering therebetween, so that the shoe 76 exhibits a good sliding characteristic. The convex flat portion 138 is deformed into a concave shape when the nitriding treatment is effected following the quenching treatment, as described in the following Experiment. Where the radius of curvature of the rounded edge 142 is smaller than needed, the shoes may be dented due to collision of the shoes with one another during the barrel polishing operation, for instance. In view of this, the radius of curvature of the rounded edge 142 is suitably determined.

The shoe 76 is a steel shoe which has been subjected to the nitriding treatment. In the present embodiment, the base body 146 of the shoe 76 is formed of a high-carbon chrome bearing steel (SUJ2 according to the JIS G 4805), and the entire surface of the shoe 76 (the entire surface of the base body 146) is covered with a nitrided layer 152 as a hard layer, which nitrided layer 152 is formed by the soft nitriding treatment, i.e., gas soft nitriding treatment. In Fig. 2, the thickness of the nitrided layer 152 is exaggerated for easier understanding. Described in detail, the nitrided layer 152 includes a compound layer having a high degree of hardness and functioning as a superficial or outermost layer, and a diffusion layer wherein the nitrogen is diffused such that the concentration of the nitrogen decreases in a direction away from the compound layer toward the inner portion of the shoe. Although the boundary between the compound layer and the diffusion layer is not clear, the compound layer preferably has a thickness of about 5-20µm. The material of the base body 146 of the shoe 76 is not limited to the above-described SUJ2. Further, the nitriding treatment and the thickness of the compound layer are not limited to those described above, but may be modified as described in the SUMMARY OF THE INVENTION.

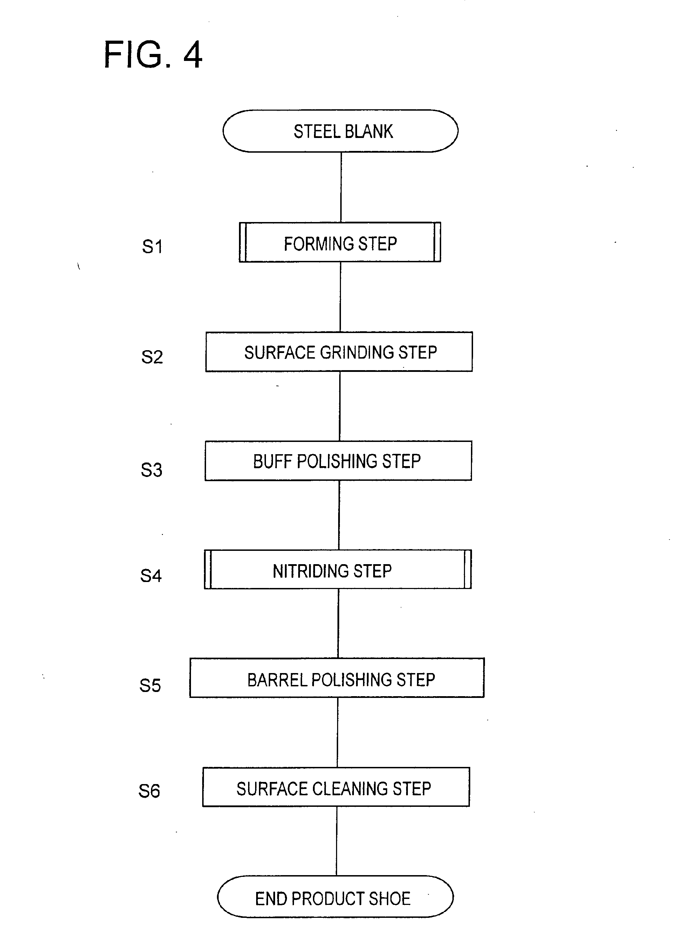

There will be next explained a method of producing the shoe 76 according to a first embodiment of the present invention by referring to the flow chart of Fig. 4. The method according to the first embodiment comprises: a forming step of forming a shoe; a grinding step of grinding the formed shoe; a buff polishing step of effecting a buff polishing operation on the shoe; a nitriding step of effecting a nitriding treatment; a barrel polishing step of effecting a barrel polishing operation on the shoe so as to polish the surface of the shoe which has been subjected to the nitriding step; and a surface cleaning step of cleaning the surface of the shoe. In the present method, any heat treatment (e.g., quenching treatment) other than the nitriding treatment is not effected on the shoe.

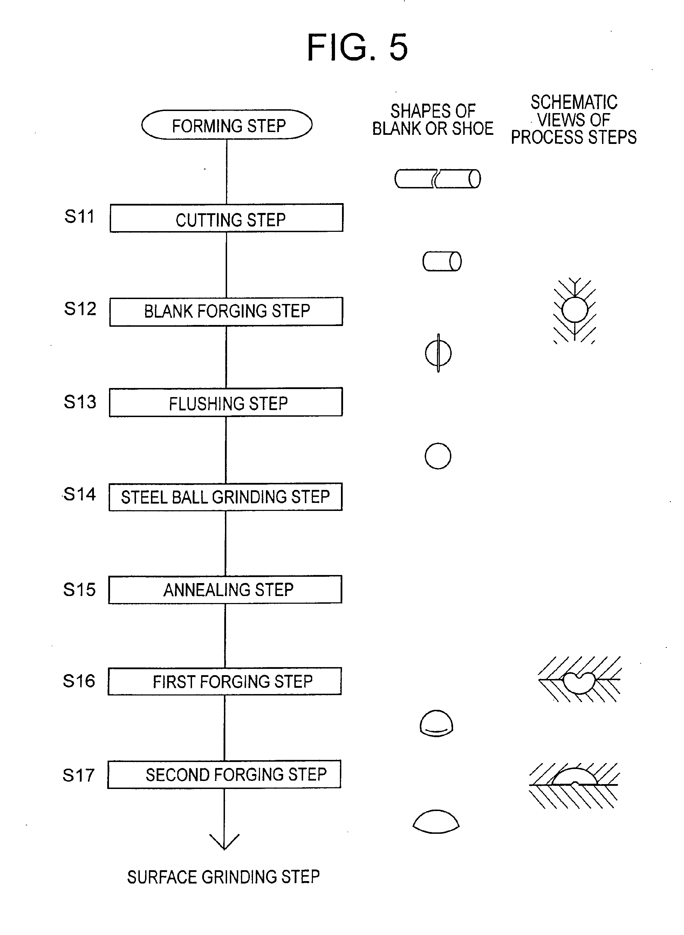

In the forming step S1, a steel blank, i.e., a wire rod of SUJ2 (JIS G 4805) in the present embodiment, is formed into a pre size-adjusted shoe. The forming step S1 includes a plurality of sub-steps as indicated in the flow chart of Fig. 5, namely, a cutting step S11, a blank forging step S12, a flushing step S13, a steel ball grinding step S14, an annealing step S15, a first forging step S16, and a second forging step S17. Described in detail, in the cutting step S11, a bar-shaped steel blank of SUJ2 is cut into a plurality of pieces, each of which has a predetermined length. The length of the cut piece of the steel blank is determined such that the volume of the cut piece is slightly larger than that of a steel ball blank which will be forged into the shoe product in the first and second forging steps S16 and S17 described below. The bar-shaped blank is cut by a sawing machine or a shearing machine. The cutting step S11 is followed by the blank forging step S12 wherein the cut piece is subjected to close-die forging in a cold condition, so that the cut piece has a steel ball shape. The die assembly used in the blank forging step S12 is designed such that an excess material forms burrs or flashes, so that the steel ball to be obtained has a substantially constant volume. In the next flushing step S13, the burrs or flashes are removed from the steel ball, so as to provide the steel ball having the substantially constant volume. The flushing step S13 is effected, for instance, first by sandwiching the steel ball with the burrs or flashes, between two grooved cast iron discs, and then rotating the two discs relative to each other under the pressure. The flushing step S13 is followed by the steel ball grinding step S14 wherein the steel ball from which the burrs or flashes have been removed is subjected to a grinding operation. The grinding operation is performed on the steel ball for improving the dimensional accuracy and the surface roughness of the steel ball by using cast iron discs or a grinding stone, for instance. In the next annealing step S15, the steel ball is subjected to an annealing operation for the purpose of facilitating the forging operations subsequently performed on the steel ball. The steel ball is annealed to lower its hardness, in a vacuum furnace under appropriate annealing conditions including the heating temperature and the cooling rate.

The steel ball which has been subjected to the annealing step S15 is forged into the shoe product in the first and second forging steps S16 and S17. In the first forging step S16, the steel ball blank is forged into an intermediate shoe, and the intermediate shoe is forged into a pre size-adjusted shoe in the second forging step S17. Each of the forging operations in these steps S16 and S17 is a cold press forging using a die assembly. In the present embodiment, the steel ball blank is subjected to the two forging steps. Where the forging ratio is relatively low, the steel ball blank may be subjected to a single forging step. On the other hand, the steel ball blank may be subjected to three or more forging steps where the forging ratio is relatively high or the steel ball blank needs to be forged with a considerably high degree of accuracy. Between successive two forging steps, an annealing treatment may be effected.

The forming step S1 is followed by the surface grinding step S2 wherein the pre size-adjusted shoe obtained in the forming step S1 is subjected at its flat portion to a grinding operation. Since the height of the shoe gives a great influence on its sliding characteristic, the shoe is required to have the intended height with high accuracy. The surface grinding operation in the surface grinding step S2 is performed mainly for adjusting the height of the shoe. In the present embodiment, the surface grinding operation in the surface grinding step S2 corresponds to a size-adjustment grinding operation. The surface grinding operation performed by a surface grinding machine using free abrasive grains, for instance. The pre-size adjusted shoe is formed into an end product shoe by the surface grinding operation. In the next buff polishing step S3 as a finishing step, the flat portion of the shoe is polished, the convexity amount of the flat portion and the radius of curvature of the rounded edge are adjusted to respective intended values. The buff polishing operation is performed by a buff polishing machine using the free abrasive grains, for instance.

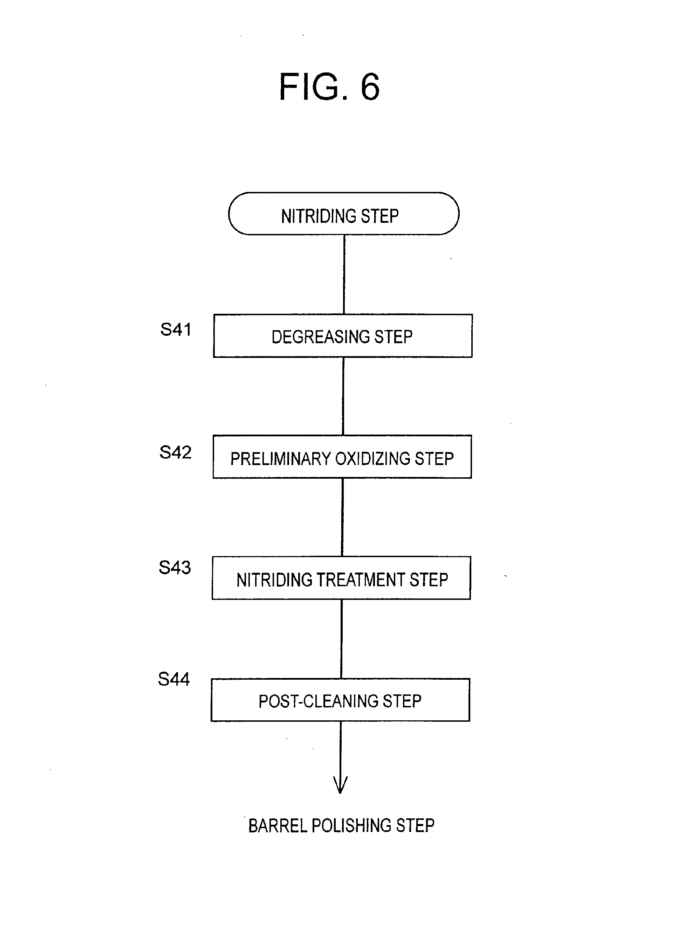

The buff polishing step S3 is followed by the nitriding step S4 wherein the buff-polished shoe is subjected to the nitriding treatment. In the present embodiment, the nitriding treatment is effected according to the gas soft nitriding method. The nitriding step S4 includes a plurality of sub-steps as indicated in the flow chart of Fig. 6, namely, a degreasing step S41, a preliminary oxidizing step S42, a nitriding treatment step S43 as a main sub-step of the nitriding step S4, and a post-cleaning step S44. Described in detail, in the degreasing step S41, the oil component which have adhered to the shoe is removed. In the next preliminary oxidizing step S42, the aqueous component included in the shoe is removed. In this regard, the preliminary oxidizing step may be referred to as a dehydrating step. Owing to those two preliminary treatments, the substances such as a coolant and an inhibitor adhering to the surface of the shoe are removed, so that the flatness of the surface of the nitrided layer is improved. The preliminary oxidizing step S42 is followed by the nitriding treatment step S43 wherein the shoe is subjected to the gas soft nitriding treatment. The conditions under which the gas soft nitriding treatment is effected are suitably determined depending upon the kind of the material of the base body of the shoe, the thickness of the nitrided layer to be formed, etc. In the present embodiment, the shoe is subjected to the gas soft nitriding treatment at about 560-580°C for a time period ranging from one hour to three hours. By the gas soft nitriding treatment, the nitrided layer, strictly speaking, the compound layer, having the thickness of about 10-20µm is formed on the surface of the shoe. The thus formed nitrided layer has a hardness of about Hv 600-1000. In the next post-cleaning step S44, the oil component on the surface of the shoe is removed.

The shoe which has been subjected to the nitriding step S4 described above is subsequently subjected to a barrel polishing operation in the barrel polishing step S5. The barrel polishing operation is performed for smoothing the surface of the shoe. In the next surface cleaning step S6, the surface of the shoe is cleaned, for thereby providing the shoe to be installed on the compressor.

In the method described above, any heat treatment (e.g., the quenching treatment) other than the nitriding treatment is not effected after the forming step. The present method permits speedy and simplified manufacture of the shoe. In the present method wherein the quenching treatment is not effected, the shoe is free from the deformation which is conventionally experienced due to the nitriding treatment effected following the quenching treatment, so that the size-adjustment grinding operation is not necessarily effected after the nitriding treatment. Accordingly, the nitrided layer formed by the nitriding treatment and having a sufficient thickness can be left without being removed by the grinding operation.

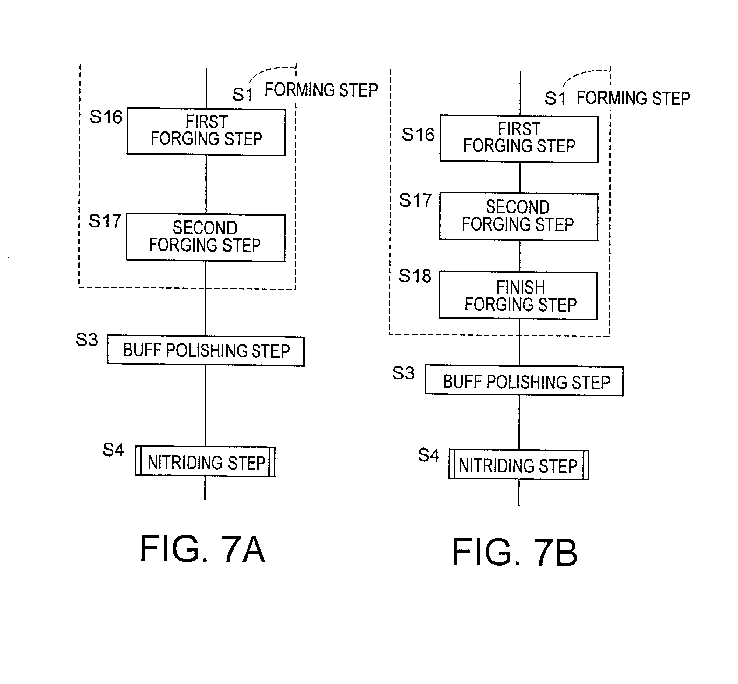

Referring next to Figs. 7A and 7B, there will be explained modifications of the method of producing a shoe according to a second and a third embodiment, respectively. In the methods according to the second and third embodiments, the surface grinding step S2 is eliminated, and the end product shoe is obtained in the forming step S1 Namely, the shoe having the intended height with high accuracy is formed in the forming step S1, and the surface grinding step S2 performed mainly to adjust the height of the shoe is eliminated. In the method according to the flow chart of Fig. 7A of the second embodiment, the die assembly used in the second forging step S17 is designed such that the shoe to be obtained has the intended height and such that the rounded edge 142 has the intended radius of curvature, so that the end product shoe is formed in the forming step S1. The end product shoe obtained in the forming step S1 is subsequently subjected to the buff polishing step S3 without effecting the surface grinding step S2, so that the convexity amount of the flat portion of the shoe is adjusted by the buff polishing operation. The method according to the flow chart of Fig. 7A of the second embodiment permits simple and speedy manufacture of the shoe. Referring next to the flow chart of Fig. 7B, there is shown a method of producing a shoe according to the third embodiment of the present invention. In the method according to the flow chart of Fig. 7B, the forming step S1 includes an additional forging step, i.e., a finish forging step S18 effected following the second forging step S17. In the finishing forging step S18, the pre size-adjusted shoe obtained in the second forging step S17 is formed into the end product shoe. The end product shoe obtained in the finish forging step S18 is then subjected to the buff polishing step S3 without effecting the surface grinding step S2. The method of producing a shoe is not limited to the details of the illustrated embodiments, but may be modified depending upon the configuration of the shoe to be obtained.

While the presently preferred embodiments of this invention have been described above, for illustrative purpose only, it is to be understood that the present invention is not limited to the details of the illustrated embodiments. For example, the principle of the invention is applicable to a shoe used for a swash plate type compressor equipped with a double-headed piston having head portions on the opposite sides of the engaging portion, or a shoe used for a swash plate type compressor of fixed capacity type. It is to be understood that the present invention may be embodied with various changes and improvements such as those described in the SUMMARY OF THE INVENTION, which may occur to those skilled in the art.

### <Experiment for confirming the effect of eliminating the quenching treatment>

Between the buff polishing step and the nitriding step in the method according to the present invention, a vacuum hardening or quenching treatment was performed on five specimen shoes as comparative examples, so that the shoes were inspected for deformation of their flat portions. Another five specimens shoes were subjected to the nitriding treatment without effecting the quenching treatment, as in the above-described embodiments of the present invention. The shoes were also inspected for deformation of their flat portions. As described below, it is confirmed that the method without effecting the quenching treatment is superior to the method wherein the quenching treatment is effected prior to the nitriding treatment.

Each of the shoes is formed of the above-indicated SUJ2. The vacuum hardening treatment was effected such that each of the five specimen shoes as the comparative examples was kept at 500-750°C for 45-60 minutes, and subsequently at 800-840°C for 60-90 minutes, and then rapidly cooled. The five specimen shoes which have been subjected to the vacuum hardening treatment described above were then subjected to the buff polishing operation, so that the convexity amount h of the flat portions of the shoes was held in a range of 1-2µm. The gas soft nitriding treatment was performed on those shoes. After the gas soft nitriding treatment, the average convexity amount of the five comparative shoes was about -2µm, that is, the average amount of concavity was about 2µm. In other words, the central part of the flat portion of each shoe was recessed by an average amount of about 4µm, that is, the flat portion became concave, as shown in Fig. 8, after the gas soft nitriding treatment.

Another five specimen shoes whose convexity amount of the flat portions had been adjusted by the buff polishing operation in a range of 1-2µm were subjected to the nitriding treatment without effecting the quenching treatment. The flat portion of each shoe maintained the convex shape. The average convexity amount of the five shoes was about 1.6µm. In other words, the flat portion of each shoe was raised at the central part by an average amount of about 0.2µm. Accordingly, in the shoes which have been subjected to the nitriding treatment without the quenching treatment, the flat portions were raised at the central parts, or the flat portions maintained the convexity amount prior to the nitriding treatment.

It is confirmed from the results described above that the shoe is not deformed if it is not subjected to the quenching treatment prior to the nitriding treatment. When the flat portion which has deformed into the concave shape due to the nitriding treatment effected following the quenching treatment is formed into the convex shape, the grinding or polishing operation needs to be performed on the radially outer portion of the flat portion of the shoe wherein the required amount of stock removal by the grinding or polishing operation is inevitably large. Further, it takes a relatively long period of time to effect the grinding or polishing operation on the shoe. The grinding or polishing operation on the radially outer portion of the flat portion of the shoe inevitably removes a considerably large amount of the nitrided layer formed at that portion, resulting in a deterioration of the properties of the shoe such as the wear resistance. To avoid this, it is necessary to form the nitrided layer having a considerably large thickness by increasing the time during which the nitriding treatment is effected. In this case, the total time required for producing the shoe (including the grinding or polishing operation and the nitriding treatment) is undesirably increased, deteriorating the production efficiency of the shoe. In contrast, the present method wherein the quenching treatment is not effected prior to the nitriding treatment permits simple and speedy manufacture of the shoe having a good sliding characteristic.

A method of producing a shoe for a swash plate type compressor, said shoe being disposed between a swash plate and a piston of said swash plate type compressor, characterized by comprising: a forming step (S1) of forming a steel blank into a shoe product including an end product shoe and a pre size-adjusted shoe; and a nitriding step (S4) of effecting a nitriding treatment on said shoe product; and wherein a quenching treatment is not effected after said forming step.

## Claims

1. A method of producing a shoe for a swash plate type compressor, said shoe being disposed between a swash plate and a piston of said swash plate type compressor, **characterized by** comprising:
a forming step (S1) of forming a steel blank into a shoe product including an end product shoe and a pre size-adjusted shoe; and
a nitriding step (S4) of effecting a nitriding treatment on said shoe product;
and wherein a quenching treatment is not effected after said forming step.

2. A method according to claim 1, wherein any heat-treatment other than said nitriding treatment is not effected after said forming step.

3. A method according to claim 1 or 2, wherein a size-adjustment grinding operation is not effected after said nitriding step.

4. A method according to claim 3, wherein said end product shoe is formed in said forming step and said size-adjustment grinding operation is not effected after said forming step.

5. A method according to any one of claims 1-4, wherein said shoe is a part-spherical crown shoe (76) having a flat portion (138) to be held in sliding contact with said swash plate (60) and a part-spherical portion (136) to be held in sliding contact with said piston (14), said flat portion being formed to have a slightly convex surface.

6. A method according to any one of claims 1-5, wherein said steel blank consists of a high carbon chrome bearing steel.

7. A method according to any one of claims 1-6, wherein said nitriding treatment consists of a gas soft nitriding treatment.

8. A shoe for a swash plate type compressor, said shoe being disposed between a swash plate and a piston of said swash plate type compressor and produced according to a method as defined in any one of claims 1-7.
